# EUROPÄISCHE PATENTANMELDUNG

(11) **EP 0 644 012 A1**
(43) Veröffentlichungstag der Anmeldung: **22.03.1995**
(21) Anmeldenummer: 94111853.1
(22) Anmeldetag: 29.07.1994
(51) Int. Cl.: B23K 9/10, B23K 9/32

(54) **Elektrische Schweissenergiequelle mit integrierter Prozessüberwachung**

(30) Priorität: 10.09.1993 DE 9313578 U
(71) Anmelder: UTP Schweissmaterial GmbH & Co. KG, D-79188 Bad Krozingen (DE)
(72) Erfinder: Kaluscha, Mario, Dipl.-Ing., D-79206 Breisach (DE); Mayer, Bernd, Dipl.-Ing.(FH), D-79111 Freiburg (DE); Magazinovic, Svjetlan, D-79117 Freiburg (DE)
(74) Vertreter: Ratzel, Gerhard, Dr.

(57) **Zusammenfassung**

Die Erfindung betrifft eine elektrische Schweißenergiequelle mit Bedienungselementen zur Voreinstellung und einer Einheit zum Steuern und/oder Regeln von Schweißparapetern, wie Schweißspannung, Schweißstrom, Drahtvorschub, Puls- und Grundzeit-Daten und dergleichen, wobei eine Schweißprozeßüberwachungseinheit zum ständigen Vergleich der Soll- und Istwerte der Schweißparameter in die elektrische Schweißenergiequelle integriert ist.

## Beschreibung

Die Erfindung betrifft eine elektrische Schweißenergiequelle mit Bedienungselementen zur Voreinstellung und einer Steuereinheit zur Steuerung von Schweißparametern, wie Schweißspannung, Schweißstrom, Drahtvorschub, Puls- und Grundzeitdaten und dergleichen.

Elektrische Schweißenergiequellen der genannten Art sind bekannt und ermöglichen, beispielsweise beim Metallschutzgasschweißen, ein weitgehend automatisches Ablaufen des Schweißprozesses: Die Hauptschweißparameter, wie Schweißspannung, Schweißstrom und Drahtvorschub, sowie die Nebenschweißparameter, wie Zündvorgang, Impulsform etc, werden vor Beginn des Prozesses voreingestellt. Nach dem Start sorgt die Steuereinheit der Schweißenergiequelle dafür, daß die Schweißparameter auf die voreingestellten Werte gesetzt und dort gehalten werden.

Für diesen automatisierten Prozeß ist es jedoch unerläßlich, daß zusätzlich ein Überwachungssystem vorgesehen ist, welches sämtliche Prozeßparameter, wie z.B. Schweißspannung, Impulsspannung, Schweißstrom, Grundstrom, Pulszeit, Grundzeit, Drahtvorschubgeschwindigkeit, Schweißdrossel, Zündprozeß, Freibrand, Wasserströmung, Kühlwasserstand und Gasdurchfluß, aufnimmt und mit den Sollwerten vergleicht. Bei einer größeren Abweichung von Istwerten und Sollwerten der Prozeßparameter liegt ein Fehler beim Prozeß vor, worauf das Überwachungsgerät eine Fehlermeldung abgibt.

Auch solche Überwachungsgeräte sind bereits bekannt. Durch ein solches Gerät werden sämtliche Anschlüsse, wie die Schutzgasleitung, die Wasserleitung und sämtliche Stromanschlüsse geschleift, wobei die interessierenden Parameter gemessen werden. Störungen werden optisch angezeigt oder als Fehlermeldung an eine übergeordneten Steuerung ausgegeben.

Ein solches Prozeßüberwachungsgerät nach dem Stand der Technik hat jedoch den Nachteil, daß zusätzliche Kabel und Leitungen, sowie zusätzliche Verbindungsstücke erforderlich sind, welche naturgemäß die Anfälligkeit gegen Störeinflüsse überproportional erhöhen. Dimensionierung und Anschluß von Kabeln und Leitungen müssen fachmännisch durchgeführt werden, um sich nicht nochmals zusätzliche Störfaktoren einzuhandeln.

Der Erfindung liegt daher die Aufgabe zugrunde, eine elektrische Schweißenergiequelle der eingangs genannten Art zu schaffen, die die genannten Nachteile einer herkömmlichen Schweißenergiequelle mit separatem Überwachungsgerät beseitigt und einen bedienerfreundlichen, einfachen und billigen automatisierten Schweißprozeß ermöglicht.

Diese Aufgabe wird erfindungsgemäß dadurch gelöst, daß eine Schweißprozeßüberwachungseinheit zum ständigen Vergleich der Soll- und Istwerte der Schweißparameter und der sonstigen Prozeßparameter in die elektrische Schweißenergiequelle integriert ist.

Erfindungsgemäß ist also erkannt worden, daß bei einer Integration der Schweißprozeßüberwachungseinheit in die elektrische Schweißenergiequelle keine zusätzlichen Leitungen und Kabel und keine zusätzlichen Verbindungs- und Schnittstellen notwendig werden, welche naturgemäß gegen Störungen, wie mechanischen Beschädigungen oder Einstreuung von Störsignalen, anfällig sind.

Schließlich ist erfindungsgemäß erkannt worden, daß der gesamte konstruktive Aufwand durch eine Integration der Schweißprozeßüberwachungseinheit deutlich verringert werden kann.

Zweckmäßigerweise sind für die Prozeßparameter-Sollwerte Toleranzbereiche an der Schweißprozeßüberwachungseinheit voreinstellbar. Dadurch können die Erfahrungswerte vom manuellen Schweißen, innerhalb welcher Toleranzbereiche eine Schwankung der einzelnen Prozeßparameter zur Erzielung eines guten Arbeitsergebnisses noch hinnehmbar sind, auch bei der erfindungsgemäßen, automatisierten elektrischen Schweißenergiequelle Eingang finden.

Vorteilhafterweise sind die Schweißprozeßüberwachungseinheit und die Steuereinheit wenigstens zum Zweck der Prozeßabschaltung bei einem Prozeßparameter-Istwert, der außerhalb des voreingestellten Toleranzbereichs liegt, miteinander verbunden. So ist eine sofortige Abschaltung des Prozesses im Störungsfall gewährleistet; der Schaden durch die Störung ist dadurch minimiert.

Vorteilhafterweise ist die erfindungsgemäße elektrische Schweißenergiequelle mit Datenspeichern zur abrufbaren Speicherung verschiedener Sätze von Schweißparametervoreinstellungen versehen. So ist es möglich, verschiedenste Schweißvorgänge mit derselben elektrischen Schweißenergiequelle zu steuern, ohne aufwendige Umstellungs- oder Programmierarbeiten zwischen den verschiedenen Prozessen vornehmen zu müssen.

Ebenfalls vorteilhaft ist, wenn auch die Schweißprozeßüberwachungseinheit mit Datenspeichern zur abrufbaren Speicherung verschiedener Sätze von Prozeßparameter-Toleranzbereichen versehen ist.

Nach einer besonders bevorzugten Ausführung der Erfindung jedoch ist ein Satz von Schweißparametervoreinstellungen nur gleichzeitig mit einem zugehörigen Satz von Prozeßparameter-Toleranzbereichen einstellbar, abspeicherbar und abrufbar, wobei die Abspeicherung der Prozeßüberwachungsparameter im selben Speicher oder einem anderen geschieht wie die Abspeicherung der Schweißparameter. So ist eine direkte Zuordnung jedes Schweißparameters zu seinem jeweils zugehörigen Toleranzbereich gewährleistet, sodaß, vor allem beim Wechseln von einem Parametersatz auf einen anderen, keine falsche Zuordnunge mehr zu einem mangelhaften Arbeitsergebnis führen kann. Bedienungsfehler sind also ausgeschlossen. Ferner ist es nicht möglich, einen neuen Parametersatz abzuspeichern, ohne gleichzeitig einen sinnvollen Toleranzbereich mit einzugeben, wodurch dieser nicht versehentlich vergessen werden kann.

Nach einer weiteren, bevorzugten Ausführungsform der Erfindung besteht die Schweißprozeßüberwachungseinheit im wesentlichen aus demselben Controller-Baustein oder einem anderen. Eine solche integrierte Prozeßüberwachung auf Controller-Basis ermöglicht eine einfache Kommunikation mit der Steuereinheit, gewährleistet ein schnelles Reagieren auf die gemessenen Daten und ihren Vergleich mit den Sollwerten, benötigt sehr wenig Platz, ist in der Lage, die Vielzahl der eingehenden Meßdaten gleichzeitig zu verarbeiten und ermöglicht schließlich eine sehr kostengünstige Herstellung der erfindungsgemäßen elektrischen Schweißenergiequelle.

Für die Voreinstellung der Toleranzbereiche ist es vorteilhaft, wenn die erfindungsgemäße elektrische Schweißenergiequelle einen Prioritätszugriff aufweist; dieser Prioritätszugriff kann aus einem Schlüsselschalter, aber auch aus der Eingabe eines Codeworts oder einer Zahlenkombination bestehen. Eine unbeabsichtigte Verstellung der für die Qualität des Endprodukts maßgeblich mitverantwortlichen Toleranzbereiche, sowie ein Verstellen derselben durch eine nichtautorisierte Person sind dadurch ausgeschlossen.

Vorzugsweise besitzt die erfindungsgemäße elektrische Schweißenergiequelle eine Schnittstelle zur Verbindung mit einer übergeordneten Steuerung, insbesondere einer SPS-Steuerung. Diese Schnittstelle kann beispielsweise eine RS 232-Schnittstelle sein. Der besondere Vorteil der erfindungsgemäßen elektrischen Schweißenergiequelle beim Anschluß an eine übergeordnete Steuerung ist, daß die übergeordnete Steuerung lediglich mit einem Bauteil, der Prozeßsteuerung und Prozeßüberwachung integriert, kommunizieren muß - zusätzliche Anschlüsse an ein externes Überwachungsgerät entfallen somit.

Weitere Merkmale und Besonderheiten der Erfindung ergeben sich aus dem im folgenden näher beschriebenen und in den Zeichnungen dargestellten Ausführungsbeispiel.

Es zeigen:
- Figur 1: die schematische Ansicht einer erfindungsgemäßen elektrischen Schweißenergiequelle,
- Figur 2: ein Blockschaltbild der erfindungsgemäßen elektrischen Schweißenergiequelle.

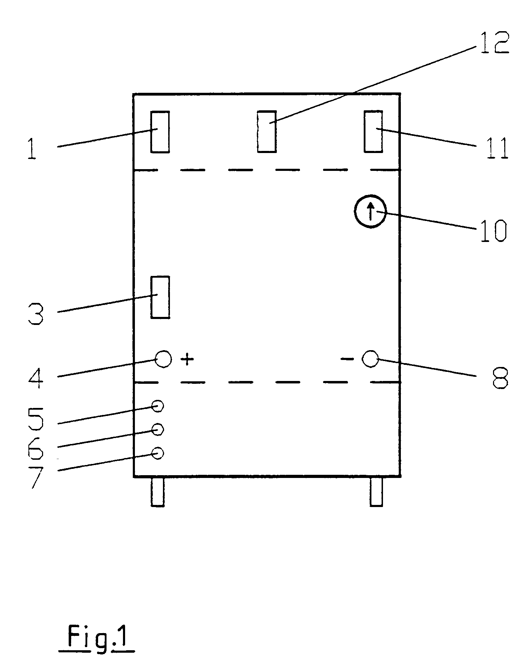

Die erfindungsgemäße elektrische Schweißenergiequelle, die in Figur 1 dargestellt ist, weist an ihrer Oberseite einen Bedientableauanschluß 1 auf, um die gesamte Anlage fernbedienen zu können, sowie eine X232-Buchse 12 und eine XRC-Buchse 11, um die Anlage wahlweise durch einen PC oder eine SPS-Steuerung bedienen zu lassen. Mit dem Hauptschalter 10 kann die Anlage ein- und ausgeschaltet werden. Sehr deutlich sieht man in dieser Zeichnung, daß zur Steuerung und Überwachung des Schweißprozesses jeweils nur ein Verbindungsglied zu den entsprechenden Vorrichtungen existiert, nämlich einen Drahtvorschubsvorrichtungsanschluß 3, einen Pluspol 4, einen Schutzgasanschluß 5, einen Wasservorlauf 6, einen Wasserrücklauf 7 und einen Minuspol 8.

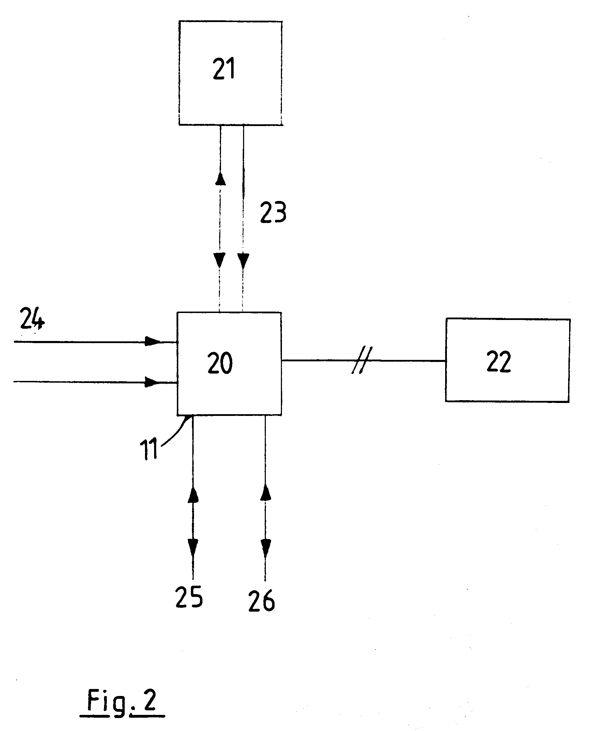

Figur 2 zeigt schematisch die prinzipielle Funktionsweise der erfindungsgemäßen Anordnung: Die Schweißprozeßüberwachungseinheit 20, hier ein Controller, wird von der Software 22 gesteuert, erhält die Sollwerte 23 der Schweißparameter von der Steuereinheit 21, die Istwerte 24 der Prozeßparameter von handelsüblichen Meßsonden und korrespondiert einerseits über den SPS-Anschluß 11 mit der SPS-Steuerung 25, andererseits mit dem Display 26, über welches verschiedene Sätze von Schweißparametervoreinstellungen mitsamt ihren zugehörigen Sätzen von Prozeßparameter-Toleranzbereichen einstellbar, abspeicherbar oder abrufbar sind.

### Bezugszeichenliste

- 1: Bedientableauanschluß
- 2: Elektrische Schweißenergiequelle
- 3: Drahtvorschubvorrichtungsanschluß
- 4: Pluspol
- 5: Schutzgasanschluß
- 6: Wasservorlauf
- 7: Wasserrücklauf
- 8: Minuspol
- 9: -
- 10: Hauptschalter
- 11: XRC (SPS-Anschluß)
- 12: X232 (PC-Anschluß)
- 13: -
- 14: -
- 15: -
- 16: -
- 17: -
- 18: -
- 19: -
- 20: Schweißprozeßüberwachungseinheit
- 21: Steuereinheit
- 22: Software
- 23: Sollwerte der Schweißparameter
- 24: Istwerte der Prozeßparameter
- 25: SPS-Steuerung
- 26: Display

## Patentansprüche

1. Elektrische Schweißenergiequelle mit Bedienungselementen zur Voreinstellung und einer Einheit zum Steuern und/oder Regeln von Schweißparametern, wie Schweißspannung, Schweißstrom, Drahtvorschub, Puls- und Grundzeit-Daten und dergleichen,
dadurch gekennzeichnet,
daß eine Schweißprozeßüberwachungseinheit (20) zum ständigen Vergleich der Soll-(23) und Istwerte (24) der Schweißparameter und der sonstigen Prozeßparameter in die elektrische Schweißenergiequelle (2) integriert ist.

2. Elektrische Schweißenergiequelle nach Anspruch 1,
dadurch gekennzeichnet,
daß an der Schweißprozeßüberwachungseinheit (20) Toleranzbereiche der Prozeßparameter-Sollwerte (23) voreinstellbar sind.

3. Elektrische Schweißenergiequelle nach Anspruch 2,
dadurch gekennzeichnet,
daß die Schweißprozeßüberwachungseinheit (20) und die Steuereinheit (21) wenigstens zum Zweck der Prozeßabschaltung bei einem Prozeßparameter-Istwert (24), der außerhalb des voreingestellten Toleranzbereichs liegt, miteinander verbunden sind.

4. Elektrische Schweißenergiequelle nach Anspruch 1,
dadurch gekennzeichnet,
daß die elektrische Schweißenergiequelle (2) mit Datenspeichern zur abrufbaren Speicherung verschiedener Sätze von Schweißparametervoreinstellungen versehen ist.

5. Elektrische Schweißenergiequelle nach Anspruch 4,
dadurch gekennzeichnet,
daß die Schweißprozeßüberwachungseinheit (20) mit Datenspeichern zur abrufbaren Speicherung verschiedener Sätze von Prozeßparameter-Toleranzbereichen versehen ist.

6. Elektrische Schweißenergiequelle nach den Ansprüchen 4 und 5,
dadurch gekennzeichnet,
daß ein Satz von Schweißparametervoreinstellungen nur gleichzeitig mit einem zugehörigen Satz von Prozeßparameter-Toleranzbereichen einstellbar, abspeicherbar oder abrufbar ist.

7. Elektrische Schweißenergiequelle nach Anspruch 1,
dadurch gekennzeichnet,
daß die Schweißprozeßüberwachungseinheit (20) im wesentlichen aus einem Controller-Baustein besteht.

8. Elektrische Schweißenergiequelle nach Anspruch 2,
dadurch gekennzeichnet,
daß die elektrische Schweißenergiequelle (2) einen Prioritätszugriff für die Voreinstellung der Toleranzbereiche aufweist.

9. Elektrische Schweißenergiequelle nach Anspruch 8,
dadurch gekennzeichnet,
daß der Prioritätszugriff ein Schlüsselschalter ist.

10. Elektrische Schweißenergiequelle nach Anspruch 8,
dadurch gekennzeichnet,
daß der Prioritätszugriff aus der Eingabe eines Codeworts oder einer Zahlenkombination besteht.

11. Elektrische Schweißenergiequelle nach Anspruch 1,
dadurch gekennzeichnet,
daß die elektrische Schweißenergiequelle mindestens eine Schnittstelle (11) zur Verbindung mit einer übergeordneten Steuerung, insbesondere einer SPS-Steuerung (25), aufweist.

12. Elektrische Schweißenergiequelle nach Anspruch 11,
dadurch gekennzeichnet,
daß mindestens eine Roboterschnittstelle und/oder eine serielle oder parallele rechnerübliche Schnittstelle vorhanden ist.
